## Europäisches Patentamt
## European Patent Office
### Office européen des brevets

(11) Veröffentlichungsnummer: **0 090 923 B1**

(19)

(12) # EUROPÄISCHE PATENTSCHRIFT

(45) Veröffentlichungstag der Patentschrift:
19.06.85

(51) Int. Cl.⁴: **B 65 G 53/66**

(21) Anmeldenummer: **83101174.7**

(22) Anmeldetag: **08.02.83**

(54) Verfahren zum pneumatischen Austrag von Gut aus einem Vorratsbehälter.

(30) Priorität: **02.04.82 DE 3212423**

(43) Veröffentlichungstag der Anmeldung:
**12.10.83 Patentblatt 83/41**

(45) Bekanntmachung des Hinweises auf die Patenterteilung:
**19.06.85 Patentblatt 85/25**

(84) Benannte Vertragsstaaten:
**AT BE DE FR GB IT NL SE**

(56) Entgegenhaltungen:
**EP - A - 0 014 769**
**DE - A - 2 612 899**
**FR - A - 1 235 390**
**FR - A - 1 289 875**
**GB - A - 1 021 645**

(73) Patentinhaber: **Krupp Polysius AG,
Graf-Galen-Strasse 17, D-4720 Beckum (DE)**

(72) Erfinder: **Arbeletche, Carlos, Dalmerweg 86,
D-4720 Beckum (DE)**
Erfinder: **Balzau, Gerhard, Mauerstrasse 14,
D-4720 Beckum (DE)**

(74) Vertreter: **Tetzner, Volkmar, Dr.-Ing. Dr. Jur.,
Van-Gogh-Strasse 3, D-8000 München 71 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zum pneumatischen Austrag von feinkörnigem Gut aus einem Vorratsbehälter in eine unter Druck stehende Förderleitung, wobei das Gut im Vorratsbehälter unter einem regelbaren pneumatischen Behälterdruck steht und aus dem Vorratsbehälter über eine regelbare pneumatische Düse in die Förderleitung gelangt und wobei die pneumatische Düse und der pneumatische Behälterdruck in Abhängigkeit von der gewünschten Gutaustragsmenge geregelt werden.

Es ist bekannt (DE-A-2 105 733), die Austragsmenge eines fluidisierten Feststoffes aus einem mit einer Waage versehenen Druckbehälter mit Hilfe des pneumatischen Behälterdruckes (des sog. Oberdruckes) zu regeln. Unterliegt jedoch der Druck in der Förderleitung raschen Schwankungen, so versagt dieses bekannte Verfahren, da die Regelung der Gutaustragsmenge über den Oberdruck schon wegen der Massenträgheit des im Druckbehälter befindlichen Gutes mit einer beträchtlichen Ansprechverzögerung verbunden ist.

Es ist weiterhin ein Verfahren zum Gutaustrag aus einem mit einer pneumatischen Düse versehenen Druckbehälter bekannt (GB-A-1 021 645), bei dem der Druck und der Massenfluß in der Förderleitung gemessen und in Abhängigkeit von den hierbei ermittelten Werten die pneumatische Düse und der Oberdruck im Behälter im Sinne einer Konstanthaltung der Gutaustragsmenge geregelt werden.

Die der vorliegenden Erfindung vorausgehenden umfangreichen Versuche haben jedoch gezeigt, daß auch dieses bekannte Verfahren dann versagt, wenn der in der Förderleitung herrschende Druck raschen Schwankungen unterliegt. Muß beispielsweise feinkörniges Gut aus dem Vorratsbehälter in eine Förderleitung eingetragen werden, die als Blasversatzleitung dient (bei der also das feinkörnige Gut, etwa Zement, mit grobkörnigem Material in dieser Förderleitung gemischt und gemeinsam weitertransportiert werden soll), so stellen sich in dieser Förderleitung vielfach rasche Druckschwankungen mit einer Frequenz unter 1 Hz ein. Benutzt man nun den in der Förderleitung herrschenden Druck als Ausgangsgröße für die Regelung, so ergibt sich eine sehr unerwünschte Instabilität der Regelung mit der Gefahr störender Pendelerscheinungen.

Der Erfindung liegt daher die Aufgabe zugrunde, unter Vermeidung der geschilderten Nachteile ein Verfahren der eingangs genannten Art dahin weiterzuentwickeln, daß auch bei raschen Druckschwankungen in der Förderleitung eine stabile Regelung und ein gleichmäßiger Austrag des feinkörnigen Gutes aus dem Vorratsbehälter mit geringer Abweichung vom Sollwert gewährleistet ist.

Diese Aufgabe wird erfindungsgemäß dadurch gelöst, daß

a) die Gutaustragsmenge durch Wiegen des Behälters laufend ermittelt wird,

b) bei einer Abweichung der Gutaustragsmenge vom vorgegebenen Sollwert zunächst die pneumatische Düse im Sinne einer Konstanthaltung der Gutaustragsmenge geregelt wird,

c) und dann, wenn die Grenzen des Regelbereiches der pneumatischen Düse erreicht werden, zusätzlich der pneumatische Behälterdruck derart geregelt wird, daß die pneumatische Düse innerhalb ihres Regelbereiches bleibt.

Bei dem erfindungsgemäßen Verfahren wird somit eine etwa auftretende Änderung der Gutaustragsmenge durch laufendes Wiegen des Vorratsbehälters erfaßt. Dadurch wird die Regelung von raschen Schwankungen des in der Förderleitung herrschenden Druckes nicht beeinflußt. Änderungen des Druckes in der Förderleitung wirken sich vielmehr erst dann auf die Regelung aus, wenn sie langsam genug erfolgen bzw. groß genug sind, um eine Änderung der Gutaustragsmenge zu bewirken. Man erreicht auf diese Weise eine erwünschte Glättung bzw. Dämpfung der von Druckschwankungen in der Förderleitung verursachten Wirkungen und gelangt damit auch bei Schwankungen des in der Förderleitung herrschenden Druckes zu einer Konstanthaltung der aus dem Vorratsbehälter ausgetragenen Gutmenge mit sehr geringer Abweichung vom Sollwert.

Hierzu trägt wesentlich bei, daß bei einer festgestellten Abweichung der Gutaustragsmenge vom vorgegebenen Sollwert zunächst die pneumatische Düse im Sinne einer Konstanthaltung der Gutaustragsmenge geregelt wird. Dieser Regeleingriff erfolgt mit ganz geringer Ansprechverzögerung, da er auf das unmittelbar vor dem Eintritt in die Förderleitung stehende Gut wirkt.

Erst beim Auftreten besonders großer Abweichungen der Gutaustragsmenge vom vorgegebenen Sollwert, wenn also die Grenzen des Regelbereiches der pneumatischen Düse erreicht werden, erfolgt zusätzlich eine Beeinflussung des pneumatischen Behälterdruckes, durch die die pneumatische Düse in ihrem Regelbereich gehalten bzw. unverzüglich wieder in diesen Regelbereich zurückgeführt wird. Da große Abweichungen der Gutaustragsmenge vom vorgegebenen Sollwert im allgemeinen nicht rasch auftreten, genügt für die Korrektur dieser Abweichungen die mit etwas größerer Ansprechverzögerung wirksame Verstellung des Oberdruckes im pneumatischen Behälter.

Durch das erfindungsgemäße Verfahren wird damit erreicht, daß Änderungen der Gutaustragsmenge vom vorgegebenen Sollwert unabhängig von in der Förderleitung auftretenden raschen Druckschwankungen zuverlässig festgestellt werden und daß die Korrektur dieser Regelabweichungen mittels der ständig in ihrem optimalen Regelbereich gehaltenen pneumatischen Düse feinfühlig und mit großer Ansprechgeschwindigkeit erfolgt.

Ein Ausführungsbeispiel des erfindungsgemäßen Verfahrens ist in der Zeichnung veranschaulicht.

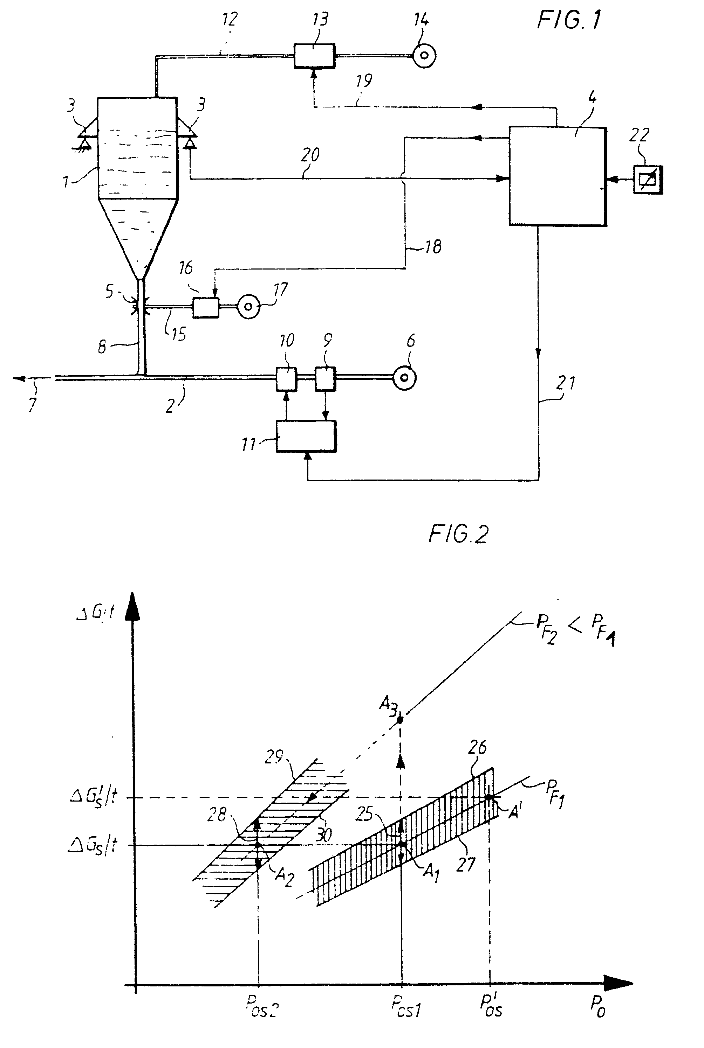

Fig. 1 zeigt ein Schema einer Anlage zum pneumatischen Austrag von feinkörnigem Gut aus einem Vorratsbehälter 1 in eine unter Druck stehende Förderleitung 2. Der Vorratsbehälter 1 stützt sich auf Druckmeßdosen 3 ab, die an eine Schaltung 4 angeschlossen sind. Die Schaltung 4 enthält im wesentlichen eine Waage und einen Rechner.

Der trichterförmig ausgebildete untere Teil des Vorratsbehälters 1 ist über eine pneumatische Düse 5 an die Förderleitung 2 angeschlossen, die mit einer Luftversorgung 6 verbunden ist und das Gut in Richtung des Pfeiles 7 zu einem nicht dargestellten Verbraucher führt. Zwischen der Luftversorgung 6 und der Anschlußstelle der die pneumatische Düse 5 enthaltenden Leitung 8 sind ein Luftmengenmesser 9 und ein Stellglied 10 angeordnet, die mit einem Regler 11 verbunden sind.

Der obere Bereich des Vorratsbehälters 1 ist über eine Leitung 12, in der sich ein Stellglied 13 befindet, an eine Luftversorgung 14 angeschlossen, die den Behälterdruck (den sog. Oberdruck) erzeugt. Nicht veranschaulicht sind weitere bekannte Einzelheiten des Vorratsbehälters 1, wie die Anschlußleitungen zur Zuführung des Gutes zum Vorratsbehälter sowie pneumatische Auflockerungseinrichtungen im trichterförmigen unteren Teil des Behälters.

Die pneumatische Düse 5 ist über eine Leitung 15, in der sich ein Stellglied 16 befindet, an eine Luftversorgung 17 angeschlossen. Das Stellglied 16 ist ebenso wie das Stellglied 13 über eine Steuerleitung 18 bzw. 19 mit der Schaltung 4 verbunden. Die Schaltung 4 steht ferner über eine Leitung 20 mit den Druckmeßdosen 3 und über eine Leitung 21 mit dem Regler 11 in Verbindung. Ein Sollwertgeber 22 dient zur Eingabe eines Sollwertes der Gutaustragsmenge in die Schaltung 4.

Die Funktion der Anlage gemäß dem erfindungsgemäßen Verfahren ist folgendermaßen:

Durch die Wirkung des im Vorratsbehälter 1 auf der Gutsäule lastenden Oberdruckes wird das Gut bei geöffneter Düse 5 über die Leitung 8 in die Förderleitung 2 eingetragen. Zu diesem Zweck muß der im Vorratsbehälter 1 herrschende Oberdruck größer als der Druck in der Förderleitung 2 sein. Die Gutaustragsmenge (pro Zeiteinheit) des Vorratsbehälters 1 wird hierbei einerseits durch die Druckdifferenz zwischen dem Behälterdruck (Oberdruck) und dem Druck in der Förderleitung 2 und andererseits durch die wirksame Öffnungsgröße der pneumatischen Düse bestimmt (letztere ist in bekannter Weise als eine pneumatische Einschnürdüse ausgeführt, wobei die der pneumatischen Düse 5 über die Leitung 15 zugeführte Steuerluftmenge den wirksamen Öffnungsquerschnitt der Düse bestimmt).

Entsprechend einem vom Sollwertgeber 22 vorgegebenen Sollwert ermittelt der in der Schaltung 4 enthaltene Rechner geeignete Werte für den pneumatischen Behälterdruck und den Öffnungsquerschnitt der pneumatischen Düse 5 und stellt diese Werte über die Steuerleitungen 18, 19 und die Stellglieder 16 bzw. 13 entsprechend ein.

Anhand von Fig. 2 seien nun die Regelvorgänge erläutert, die auftreten, wenn sich der in der Förderleitung 2 herrschende Druck $P_F$ mehr oder weniger stark ändert.

Fig. 2 zeigt die Abhängigkeit zwischen der zeitlichen Gutaustragsmenge $\Delta G/t$ (d. h. der der Austragsmenge entsprechenden Gewichtsänderung des Vorratsbehälters pro Zeiteinheit) und dem Oberdruck $P_o$.

Für einen bestimmten Druck $P_{F1}$, der in der Förderleitung 2 herrscht, ist einer gewünschten zeitlichen Gutaustragsmenge $\Delta G_s/t$ ein bestimmter Oberdruck $P_{os1}$ zugeordnet. Der betreffende Arbeitspunkt ist in Fig. 2 mit $A_1$ bezeichnet (einer gewünschten größeren Gutaustragsmenge $\Delta G'_s/t$ entsprechen ein vergrößerter Oberdruck $P'_{os}$ und der Arbeitspunkt $A'$ beim gleichen Druck $P_{F1}$ in der Förderleitung 2).

Treten nun kleine Schwankungen der Gutaustragsmenge auf (etwa durch rasche kleine Schwankungen des in der Förderleitung 2 herrschenden Druckes $P_{F1}$), so liefert die Schaltung 4 (die ein entsprechendes Signal von den Druckmeßdosen 3 erhält) ein Regelsignal an das Stellglied 16 der pneumatischen Düse 5. Hierdurch wird der Öffnungsquerschnitt der pneumatischen Düse 5 so verändert, daß die gewünschte Gutaustragsmenge $\Delta G_s/t$ aufrechterhalten wird. Der durch die pneumatische Düse 5 gegebene Regelbereich um den Arbeitspunkt $A_1$ ist in Fig. 2 durch den Doppelpfeil 25 sowie die Begrenzungslinien 26, 27 des senkrecht schraffierten Bereiches gekennzeichnet.

Tritt nun eine größere Abweichung der Gutaustragsmenge vom Sollwert $\Delta G_s/t$ auf, ändert sich beispielsweise der Druck in der Förderleitung 2 von $P_{F1}$ auf $P_{F2}$ (wobei $P_{F2}$ kleiner als $P_{F1}$ sei), so kann die Ausregelung dieser Änderung der Gutaustragsmenge nicht mehr über die pneumatische Düse 5 erfolgen (deren durch die Linien 26, 27 gekennzeichneter Regelbereich wird hierbei überschritten). Bei konstant gehaltenem Oberdruck $P_{os1}$ würde der Arbeitspunkt von $A_1$ auf $A_3$ springen. Hier greift nun zusätzlich die Regelung des Oberdruckes ein. Die Schaltung 4 liefert an das Stellglied 13 ein Signal, durch das im angenommenen Fall der Oberdruck vom Wert $P_{os1}$ auf den Wert $P_{os2}$ zurückgeführt wird. Bei diesem verringerten Wert des Oberdruckes ergibt sich bei dem neuen (verringerten) Druck $P_{F2}$ in der Förderleitung 2 dieselbe zeitliche Gutaustragsmenge $\Delta G_s/t$ (Arbeitspunkt $A_2$). Kleinere Schwankungen der Gutaustragsmenge, die nun im Bereich des Arbeitspunktes $A_2$ auftreten, werden wieder durch die pneumatische Düse 5 ausgeregelt. Deren Regelbereich (um den Arbeitspunkt A₂) ist durch den Doppelpfeil 28, die Begrenzungslinien 29, 30 und die horizontale Schraffur gekennzeichnet.

Bei einem praktischen Anwendungsbeispiel des erfindungsgemäßen Verfahrens wird aus dem Vorratsbehälter eine vorgewählte Zement-Austragsmenge mit kleiner Regelabweichung (±3%) kontinuierlich in eine unter einem Druck von 3 bis 5 bar stehende Blasversatzleitung gefördert, die zum Transport von grobkörnigem Schiefer dient. In dieser Blasversatzleitung muß sich der Zement gleichmäßig mit dem Füllstoffschiefer mischen. Bedingt durch Misch- und Transportvorgänge sowie gegebenenfalls auch durch verbraucherseitige Einflüsse kann hierbei der pneumatische Druck in der Blasversatzleitung mit einer Frequenz von etwa 0,25 Hz schwanken. Bei dem erfindungsgemäßen Verfahren haben diese raschen Druckschwankungen jedoch keinen Einfluß auf den gleichmäßigen Austrag des Gutes aus dem Vorratsbehälter.

## Patentansprüche

1. Verfahren zum pneumatischen Austrag von feinkörnigem Gut aus einem Vorratsbehälter (1) in eine unter Druck stehende Förderleitung (2), wobei das Gut im Vorratsbehälter unter einem regelbaren pneumatischen Behälterdruck steht und aus dem Vorratsbehälter über eine regelbare pneumatische Düse (5) in die Förderleitung gelangt und wobei die pneumatische Düse und der pneumatische Behälterdruck in Abhängigkeit von der gewünschten Gutaustragsmenge geregelt werden, dadurch gekennzeichnet, daß

a) die Gutaustragsmenge durch Wiegen des Behälters laufend ermittelt wird,

b) bei einer Abweichung der Gutaustragsmenge vom vorgegebenen Sollwert zunächst die pneumatische Düse im Sinne einer Konstanthaltung der Gutaustragsmenge geregelt wird,

c) und dann, wenn die Grenzen des Regelbereiches der pneumatischen Düse erreicht werden, zusätzlich der pneumatische Behälterdruck derart geregelt wird, daß die pneumatische Düse innerhalb ihres Regelbereiches bleibt.

2. Verfahren nach Anspruch 1, dadurch gekennzeichnet, daß aus dem Vorratsbehälter eine vorgewählte Zement-Austragsmenge mit kleiner Regelabweichung kontinuierlich in eine unter einem Druck von 3 bis 5 bar stehende, zum Transport von grobkörnigem Schiefer dienende Blasversatzleitung gefördert wird.

## Claims

1. Method of pneumatic discharge of fine-grained material from a storage container (1) into a pressurised feed pipe (2) in which the material in the storage container is under a regulable pneumatic pressure and passes out of the storage container through a regulable pneumatic nozzle (5) into the feed pipe and the pneumatic nozzle and the pneumatic container pressure are regulated as a function of the desired quantity of material discharged, characterised in that

a) the quantity of material discharged is continuously determined by weighing of the container,

b) in the event of deviation of the quantity of material discharged from the predetermined theoretical value the pneumatic nozzle is regulated so as to keep the quantity of material discharged constant,

c) and when the limits of the range of regulation of the pneumatic nozzle are reached, the pneumatic pressure in the container is also regulated in such a way that the pneumatic nozzle remains within its range of regulation.

2. Method as claimed in claim 1, characterised in that a preselected discharge quantity of cement is delivered from the storage container with a low regulation fluctuation continuously to a pneumatic stowing pipe which is under a pressure of 3 to 5 bars and serves to transport coarse-grained shale.

## Revendications

1. Procédé pour le déchargement pneumatique d'un réservoir (1) contenant un matériau à granulométrie fine dans une canalisation de transfert (2) sous pression, le produit se trouvant dans le réservoir étant sous une pression pneumatique réglable qui règne dans ce dernier et parvenant du réservoir dans la canalisation de transfert par un ajutage pneumatique réglable (5) et ce dernier ainsi que la pression pneumatique régnant dans le réservoir étant réglés en fonction du débit souhaité de décharge de la matière, procédé caractérisé en ce que:

a) le débit de décharge de la matière se détermine en continu par pesée du réservoir,

b) en cas d'écart du débit de décharge par rapport à une consigne prescrite, le réglage porte tout d'abord sur l'ajutage pneumatique dans le sens du maintien du débit de décharge à une valeur constante,

c) et ensuite, lorsque les limites de la plage de réglage de l'ajutage pneumatique sont atteintes, le réglage porte accessoirement sur la pression pneumatique régnant dans le réservoir de manière que l'ajutage pneumatique demeure dans sa plage de réglage.

2. Procédé selon la revendication 1, caractérisé en ce que du ciment prélevé sur le réservoir à un débit prescrit de décharge avec un faible écart de réglage est transféré en continu dans une conduite de mélange pneumatique dans laquelle règne une pression de 3 à 5 bars et qui est destinée au transport de schiste à gros grains.

0 090 923

FIG.1

FIG.2

7